Europäisches Patentamt

European Patent Office

Office européen des brevets

(19)

(11) **EP 1 204 214 A1**

(12) **EUROPEAN PATENT APPLICATION**

(43) Date of publication:
**08.05.2002 Bulletin 2002/19**

(51) Int Cl.7: **H04B 1/707**

(21) Application number: **00811017.3**

(22) Date of filing: **01.11.2000**

(84) Designated Contracting States:
**DE**
Designated Extension States:
**AL LT LV MK RO SI**

(71) Applicant: **ABB RESEARCH LTD.**
**8050 Zürich (CH)**

(72) Inventor: **Dzung, Dacfey**
**5430 Wettingen (CH)**

(74) Representative: **ABB Patent Attorneys**
**c/o ABB Schweiz AG**
**Brown Boveri Strasse 6**
**5400 Baden (CH)**

(54) **Direct sequence spread spectrum modulation of an analog signal**

(57)    In a method for transmitting an analog input signal ($a_B$) by using direct spread spectrum modulation, in a transmitter device (11,11'),

- a clock signal synchronises a data spreading signal ($c_D$) with a synchronisation spreading signal ($c_S$), each spreading signal being ($c_D$, $c_S$) formed by repeating a corresponding pseudorandom noise sequence or spreading code ($c_D(t)$, $c_S(t)$),
- the analog input signal ($a_B$) is modulated with the data spreading signal ($c_D$) to generate a modulated analog signal ($a_M$),
- a function of the modulated analog signal ($a_M$) and a function of the synchronisation spreading signal ($c_S$) are added to form a transmitted signal ($y_{RF}$, $y_{BB}$).

As a result, the transmitted signal ($y_{RF}$, $y_{BB}$) contains synchronisation information for restoring the analog signal in a receiver device (20,20'), where:

- a first function of a received signal is correlated with the synchronisation spreading code ($c_S(t)$) which correlation generates a restored clock signal ($b_R$),
- the restored clock signal ($b_R$) synchronises a generation of a restored data spreading signal ($C_{DR}$),
- a second function of the received signal is demodulated with the restored data spreading signal ($C_{DR}$), which generates a restored analog signal.

Fig. 3

EP 1 204 214 A1

Fig. 4

## Description

## Field of the Invention

The invention relates to the field of communications technology, in particular to direct spread spectrum modulation of an analog signal. It relates to a method and system for transmitting and/or restoring an analog input signal by using direct spread spectrum modulation according to the preamble of claim 1, 5, 6, 7, 11 and 12, respectively.

## Background of the Invention

*Analogue* transmission of communication signals is today being replaced by *digital* transmission. Analogue transmission has the advantage of being nearly delay-less, but it is difficult to introduce any error-correction and multiple accessing methods, i.e. use of the same communication channel by several users, into such systems.

*Digital* transmission systems, on the other hand, allow easy introduction of error-correction and of multiple-access methods. Specifically, digital spread-spectrum is a well known modulation to improve transmission reliability and to allow multiple access. Direct-spread spread-spectrum DSSS modulation operates as follows: User bits that are to be transmitted are mapped to a sequence of rectangular data pulses or symbols, each having a value of $\pm 1$ and a duration of $T_{symb}$. This sequence requires a bandwidth of approximately $1/T_{symb}$. A spreading code is selected as a pseudo-random sequence of N so-called chips, where each chip is a rectangular $\pm 1$ pulse of length $T_{chip} = T_{symb}/N$, with $N \gg 1$. Each symbol is then multiplied synchronously with the spreading code, that is, a signal with the sequence of data pulses is multiplied or modulated with a spreading signal that is generated by periodically repeating the spreading code. The repetitive spreading signal must be synchronised with the data pulses. The result of this modulation is a sequence of repeated instances of the spreading code, where some instances have their sign changed according to the data pulses. From the frequency domain point of view, the result is a spread spectrum signal with a bandwidth of approximately $1/T_{chip} = N/T_{symb} \gg 1/T_{symb}$. This signal is transmitted as it is, or possibly after modulating it onto a radio-frequency (RF) carrier signal. In a receiver, possibly after demodulation from the RF signal, correlation with the known spreading code gives a so-called symbol timing or timing of the data pulses, i.e. the beginning of the instances of the (possibly inverted) spreading code in the received signal. The data is demodulated (de-spread) by multiplying the received synchronised sequence with the known spreading code.

Error-correction in such a DSSS modulation system takes place in the de-spreading process, where all additive non-coherent noise signals will be suppressed by a factor N. Also, some frequency-dependent distortion of the transmitted signal can be compensated. Multiple access is achieved by choosing different (pseudo-)orthogonal spreading codes for different users.

Digital transmission may however incur a sizeable communication delay, since the original signal may have to be converted into digital form, synchronisation preambles must be added, and error-correction must be performed in a block-wise manner. It therefore is desirable to combine the advantages of analogue transmission with those of the DSSS method.

Direct spread spectrum modulation of an analog signal is described in US patent 5,673,323. Since an analog signal does not consist of rectangular pulses, the concept of synchronous spreading and de-spreading is not applicable. In US 5,673,323, synchronisation when despreading is achieved by varying the timing of the spreading code until a received-strength-signal is maximised. This works because the analogue signal that is modulated always contains a 25 kHz pilot signal generated for encoding stereo signals. However, the synchronisation method is not applicable when arbitrary analog signals are to be modulated.

## Description of the Invention

It is therefore an object of the invention to create a method and system for transmitting and/or restoring an analog input signal by using direct spread spectrum modulation of the type mentioned initially, which overcomes the disadvantages mentioned above.

These objects are achieved by a method and system for transmitting and/or restoring an analog input signal by using direct spread spectrum modulation according to the claims 1, 5, 6, 7, 11 and 12.

In the inventive method and system for transmitting an analog input signal by using direct spread spectrum modulation, in a transmitter device,

- a clock signal synchronises a data spreading signal with a synchronisation spreading signal, each spreading signal being formed by repeating a corresponding pseudorandom spreading code,
- the analog input signal is modulated with the data spreading signal to generate a modulated analog signal,
- a function of the modulated analog signal and a function of the synchronisation spreading signal are added to form a transmitted signal, and
- the transmitted signal is transmitted.

As a result, the transmitted signal contains synchronisation information, i.e. the function of the synchronisation spreading signal, which is then used to restore the analog signal as follows: In the inventive method and system for restoring the analog signal, in a receiver device,

- the transmitted signal is received as a received signal,
- a first function of the received signal is correlated with the synchronisation spreading signal, which correlation generates a restored clock signal,
- the restored clock signal synchronises a generation of a restored data spreading signal,
- a second function of the received signal is demodulated with the restored data spreading signal, which generates a restored analog signal.

In a first preferred variant of the invention, in the transmitter device, the function of the modulated analog signal is identical to the modulated analog signal itself, and the function of the synchronisation spreading signal is identical to the synchronisation spreading signal itself. As a result, the transmitted signal is the sum of the modulated analog signal and the synchronisation spreading signal.

The transmitted signal therefore is a so-called baseband signal and is preferrably transmitted e.g. over a wire connection, in particular over a power line.

In the corresponding method for restoring the analog signal according to this first preferred variant of the invention, the first function of the received signal is identical to the received signal itself,
the restored clock signal synchronises a generation of a restored synchronisation spreading signal, and
the second function of the received signal is either is identical to the received signal itself or is generated by subtracting the restored synchronisation spreading signal from the received signal.

As a result, synchronisation information, represented by the restored clock signal is reliably recovered from the transmitted and received signal without any preconditions or assumptions regarding the analog signal.

In a second preferred variant of the invention, the function of the modulated analog signal and the function of the synchronisation spreading signal are obtained by modulating, in the transmitter, the respective signals by carrier amplitude modulation, where both carrier modulations are done with carrier signals that have the same frequency but a relative phase shift of 90°.

In the corresponding method for restoring the analog signal, each of the first and second function of the received signal is generated by demodulating, in the receiver, the received signal with a carrier frequency signal, where the corresponding two carrier frequency signals have the same carrier frequency and a relative phase shift of 90°.

As a result, the restored synchronisation spreading signal corresponds to the synchronisation spreading signal of the transmitter, and the restored modulated analog signal corresponds to the modulated analog signal of the transmitter. From the restored synchronisation spreading signal, the restored data spreading signal is generated, with which the restored modulated analog signal is despread.

The invention provides the possibility to introduce a wireless link for transmitting a given analog signal transparently and without changes to a source of the analog signal. This makes an inventive system comprising an inventive transmitter and receiver well suited for replacing existing wire-based communication links by wireless links.

Further preferred embodiments are evident from the dependent patent claims.

## Brief Description of the Drawings

The subject matter of the invention will be explained in more detail in the following text with reference to preferred exemplary embodiments which are illustrated in the attached drawings, in which:

Figure 1    shows a block diagram of a transmitter according to a first preferred variant of the invention;

Figure 2    shows a block diagram of a receiver according to the first preferred variant of the invention;

Figure 3    shows a block diagram of a transmitter according to a second preferred variant of the invention;

Figure 4    shows a block diagram of a receiver according to the second preferred variant of the invention; and

Figure 5    shows trajectories of signals occuring in a system according to the second preferred variant of the invention.

The reference symbols used in the drawings, and their meanings, are listed in summary form in the list of reference symbols. In principle, identical parts are provided with the same reference symbols in the figures.

## Detailed Description of Preferred Embodiments

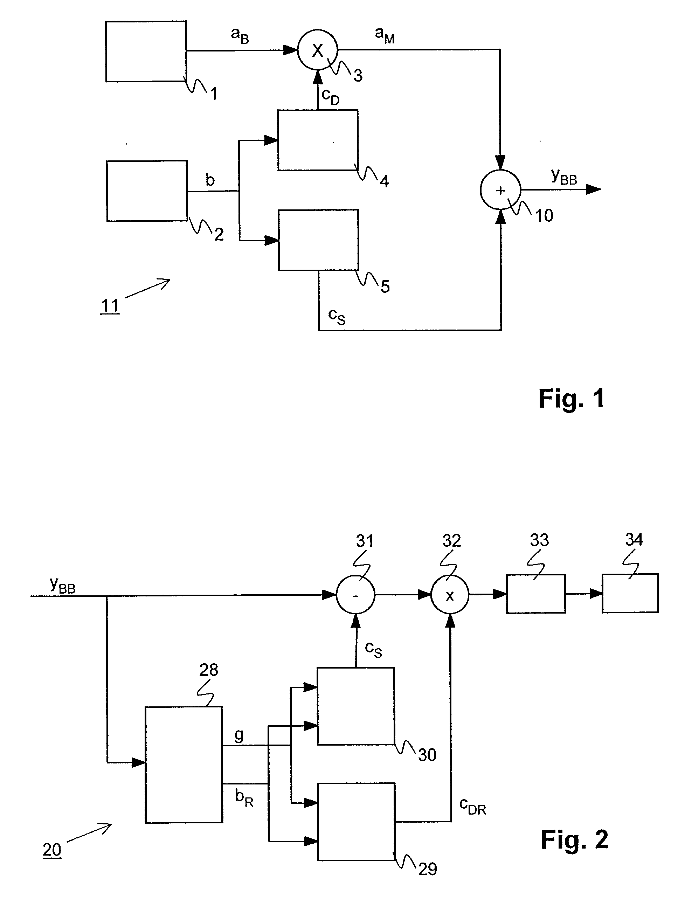

Figure 1 shows a block diagram of a transmitter device or transmitter for baseband transmission 11 according to a first preferred variant of the invention. A input unit 1 provides an analog input signal $a_B$. A spread spectrum modulator 3 is arranged to modulate the analog input signal $a_B$ with a data spreading signal $c_D$, generating a modulated analog signal $a_M$. A data spreading code generator 4 generates the data spreading signal $c_D$, and a synchronisation spreading code generator 5 generates a synchronisation spreading signal $c_S$. A clock 2 is arranged to generate a clock signal b to synchronise the data spreading code generator 4 and the synchronisation spreading code generator 5. The synchronisation spreading signal $c_S$ and the modulated analog signal $a_M$ are added in a summing means or adder 10, generating a base band signal $y_{BB}$. The transmitter optionally comprises means for amplifying and transmitting the base band signal $y_{BB}$, preferrably over a wire based connection.

Figure 2 shows a block diagram of a receiver device or receiver for baseband reception 20 according to the first preferred variant of the invention. A synchronisation correlation unit 28 is arranged to generate a restored clock signal $b_R$ and a gain signal $g$ from a received version of the base band signal $y_{BB}$. From said restored clock and gain signals $b_R,g$, a data despreading code generator 29 generates a restored data spreading signal $c_{DR}$ and a synchronisation despreading code generator 30 generates a synchronisation spreading signal $c_S$. A subtracting unit 31 subtracts the synchronisation spreading signal $c_S$ from the base band signal $y_{BB}$. A spread spectrum demodulator 32 demodulates the result of this subtraction with the restored data spreading signal $c_{DR}$. An output low pass filter 33 filters the resulting analog signal and transmits it to an output unit 34.

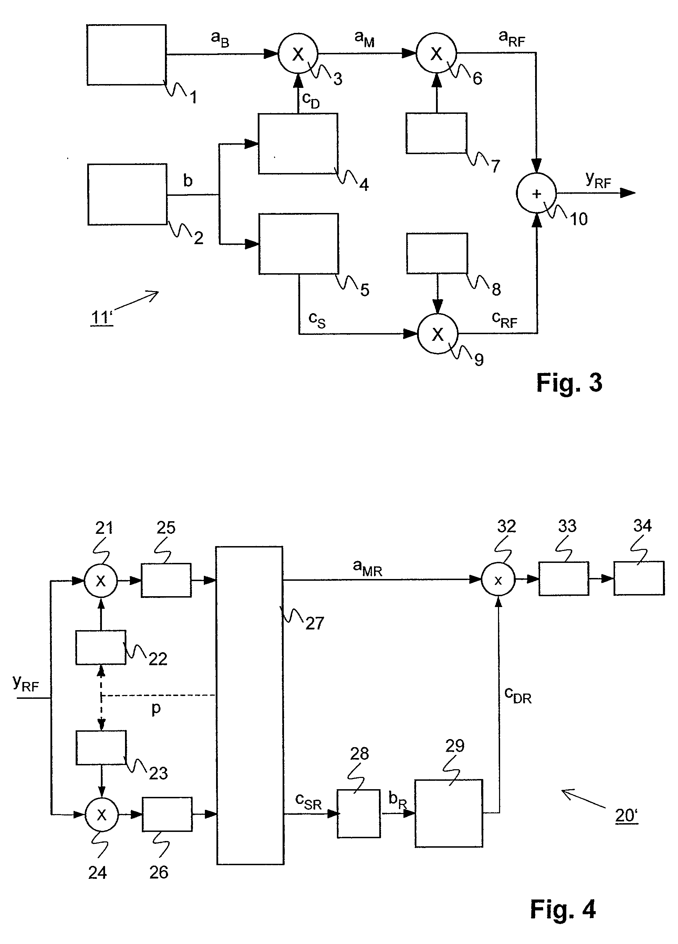

Figure 3 shows a block diagram of a transmitter device for RF transmission 11' according to a second preferred variant of the invention. As in the first preferred variant, a input unit 1 provides an analog input signal $a_B$. A spread spectrum modulator 3 is arranged to modulate the analog input signal $a_B$ with a data spreading signal $c_D$, generating a modulated analog signal $a_M$. A data spreading code generator 4 generates the data spreading signal $c_D$, and a synchronisation spreading code generator 5 that generates a synchronisation spreading signal $c_S$. A clock 2 is arranged to generate a clock signal $b$ to synchronise the data spreading code generator 4 and the synchronisation spreading code generator 5.

Differing from the first preferred variant, a first carrier amplitude modulator 6 modulates the modulated analog signal $a_M$, generating a carrier amplitude modulated analog signal $a_{RF}$. A second carrier amplitude modulator 9 modulates the synchronisation spreading signal $c_S$, generating a carrier amplitude modulated clock signal $c_{RF}$. The first carrier amplitude modulator 6 is provided with a carrier frequency signal by a first transmitter carrier frequency generator 7. The second carrier amplitude modulator 9 is provided with a carrier frequency signal by a second transmitter carrier frequency generator 8. The two carrier frequency signals have the same frequency and are shifted relative to each other by a phase shift of 90°. A summing means or adder 10 adds the two carrier modulated signals $a_{RF}$, $c_{RF}$, generating a carrier amplitude modulated signal $y_{RF}$. The transmitter preferrably comprises means for amplifying and transmitting the carrier amplitude modulated signal $y_{RF}$, preferrably over an antenna and a wireless connection.

Figure 4 shows a block diagram of a receiver device for RF reception 20' according to the second preferred variant of the invention. Wireless reception means (not shown in the figure), such as an antenna, appropriate filters and amplifiers are arranged to receive the transmitted carrier amplitude modulated signal $y_{RF}$. A first carrier frequency demodulator 21 is arranged to demodulate the carrier amplitude modulated signal $y_{RF}$ with a carrier frequency signal generated by a first receiver carrier frequency generator 22, and a second carrier frequency demodulator 24 is arranged to demodulate the carrier amplitude modulated signal $y_{RF}$ with a carrier frequency signal generated by a second receiver carrier frequency generator 23. As in the transmitter, the two carrier frequency signals have the same frequency and are shifted relative to each other by a phase shift of 90°. The two carrier frequency signals also have the same frequency as the carrier frequency signals of the transmitter. The output signals of the first and second carrier frequency demodulators 21,24 are filtered by a first low pass filter 25 and a second low pass filter 26, respectively and the two filtered signals are input to a carrier phase synchronisation unit 27. The carrier phase synchronisation unit 27 generates a restored modulated analog signal $a_{MR}$ that corresponds to the modulated analog signal $a_M$ of the transmitter, a restored synchronisation spreading signal $c_{SR}$ that corresponds to the synchronisation spreading signal $c_S$ of the transmitter, and optionally a phase shift signal $p$ that is input to the first and second receiver carrier frequency generators 22,23. The restored synchronisation spreading signal $c_{SR}$ is input to a synchronisation correlation unit 28 which generates a restored clock signal $b_R$, which in turn is input to a data despreading code generator 29 which generates a restored data spreading signal $c_{DR}$ that corresponds to the data spreading signal $c_D$ of the transmitter. A spread spectrum demodulator 32 de-spreads or demodulates the restored modulated analog signal $a_{MR}$ with the restored data spreading signal $c_{DR}$. The demodulated analog signal is preferrably filtered with an output low pass filter 33 and transmitted to an output unit 34.

The invention according to the first preferred variant functions as follows: The data spreading signal $c_D$ is a repetitive sequence of a data spreading code $c_D$ (t), and the synchronisation spreading signal $c_S$ is a repetitive sequence of a synchronisation spreading code $c_S$(t). Both codes are pseudorandom noise sequences and are defined for $0<t<T_{REP}$, where $T_{REP}$ is a duration of the codes. $T_{REP}$ is essentially equal to the time between clock pulses generated by the clock 2. The two sequences $c_D$, $c_S$ are synchronised with each other, that is, in both sequences the repetition of the corresponding code occurs at essentially the same instant. The two codes are (pseudo)orthogonal, that is,

$$\int_0^{T_{REP}} c_D(t)c_S(t)dt \approx 0$$

The pair of codes $c_D$(t), $c_S$(t) is stored and used in associated transmitter and receiver devices that form a transmission system. Several transmission systems, each with a different pair of codes then may share a common channel, such as a wire or a given RF band, without interfering with each other.

The analog input signal $a_B$, referred to as "data" throughout this application, originates from e.g. a sensor, or any other device that provides an analog data signal. It is conditioned, i.e. filtered and amplified or attenuated in the input unit 1. In a preferred embodiment of the invention, the analog input signal is a line code signal, i.e. an essentially digital signal, which, however is not synchronised with the data spreading signal $c_D$ and therefore poses the same synchronisation problem as an essentially analog signal. Line codes are mappings of digital sequences to baseband signals for transmission over wire lines. For example, bits are mapped to rectangular pulses of +1 Volt or -1 Volt. More complicated line codes facilitate synchronisation and have better spectral characteristics.

At the receiver device for baseband reception 20, the received base band signal $y_{BB}$ is correlated with the synchronisation spreading code $c_S(t)$, i.e. a correlation signal

$$y_S = y_{BB} * c_S (-t)$$

is computed, where the operator "*" denotes convolution. Since the base band signal $y_{BB}$ contains the synchronisation spreading signal $c_S$, the correlation signal will have periodic strong peaks, which correspond to the clock pulses of the transmitter 11. The resulting restored clock signal $b_R$ is used to synchronise the synchronisation spreading signal $c_S$ generated in the synchronisation despreading code generator 30 and the restored data spreading signal $c_{DR}$ generated in the data despreading code generator 29 with the base band signal $y_{BB}$. The peak value of the correlation signal indicates how strong the received synchronisation spreading signal $c_S$ is. The gain g is equal to the peak value.

The base band signal $y_{BB}$ also contains the modulated analog signal $a_M$ which, due to the orthogonality of the data spreading code $c_D(t)$, and the synchronisation spreading code $c_S(t)$, should not contribute to the correlation signal computed in the synchronisation correlation unit 28. However, the data spreading code $c_D(t)$ is, in the transmitter, multiplied with an analog signal that may vary during a single instance of the data spreading code $c_D(t)$. This is in contrast to the case when digital data that is synchronised with the instances of the data spreading code $c_D(t)$ is modulated. In order to maintain orthogonality of the modulated analog signal $a_M$ and the synchronisation spreading signal $c_S$ as much as possible, it is preferred that the analog input signal $a_B$ remains essentially constant for the duration of a code $T_{REP}$. In other words, the bandwidth of the analog input signal $a_B$ preferrably is smaller than 1/10 or one half of 1 $/T_{REP}$. For wireless transmission, values of $T_{REP}$ are in the order of 10 microseconds, i.e. l/$T_{REP}$ is in the order of 100 kHz.

In one embodiment of the invention, the base band signal $y_{BB}$ itself is demodulated in the spread spectrum demodulator 32. If the modulated analog signal $a_M$ and the synchronisation spreading signal $c_S$ are truly orthogonal, then the demodulation with the restored data spreading signal $C_{DR}$ eliminates any influence of the synchronisation spreading signal $c_S$ contained in the base band signal $y_{BB}$.

However, for the reasons given above, orthogonality may be affected by the analog nature of the modulated analog signal $a_M$. Therefore, in a preferred embodiment of the invention, the synchronisation spreading signal $c_S$ is restored and scaled by the gain g, multiplied with the peak value of the correlation signal in the synchronisation despreading code generator 30, and subtracted from the base band signal $y_{BB}$. The result is then demodulated in the spread spectrum demodulator 32. As a consequence, the influence of the synchronisation spreading signal $c_S$ on the restored analog signal is further reduced.

The output low pass filter 33 filters high frequency sideband signals from the output of the spread spectrum demodulator 32, leaving the restored analog signal.

Spread spectrum modulation is achieved with analog or digital circuits. When a digital circuit is used, the analog input signal is $a_B$ sampled at the chip frequency of 1/$T_{chip}$ prior to multiplication with the corresponding code.

The invention according to the second preferred variant functions as follows: The modulated analog signal $a_M$ and synchronisation spreading signal $c_S$ are generated as in the first preferred variant. The signals are then carrier amplitude modulated with carrier frequency signals of frequency $f_D$ that may be described as $\cos(2\pi f_D t)$ and $\sin d(2\pi f_D t)$, respectively. This kind of modulation is known as quadrature (I/Q) mixing. For wireless transmission, the carrier frequency $f_D$ lies in the radio frequency, i.e. kHZ to GHz range. A preferred range of frequencies lies in a 2.4 GHz frequency range reserved for industrial use.

In contrast to the abovedescribed base band variant, orthogonality between spread analogue signal and synchronisation signal is achieved by the quadrature mixing, such that the synchronisation spreading code $c_S(t)$ and the data spreading code $c_D(t)$ are not necessarily orthogonal and not necessarily of the same length.

At the receiver, the carrier amplitude modulated signal $y_{RF}$ is first quadrature-demodulated by the first and second carrier frequency demodulator 21,24 whose outputs are filtered by first and second low pass filters 25,26. A difference between the carrier-phase of the transmitter 11' and the receiver 20' may have to be corrected. This carrier-phase estimation is simple due to the specific structure of the transmitted signals: The range of the so-called I or in-phase signal given by the first carrier frequency demodulator 21 or first low pass filter 25 is analogue, while the synchronisation signal or Q or quadrature phase signal given by the second carrier frequency demodulator 24 or second low pass filter 26 only takes on values of ±1. Measurement of these values in the carrier phase synchronisation unit 27 reveals the carrier phase. The carrier phase is either adjusted by the phase shift signal p transmitted to the first and second receiver carrier frequency generator 21,23, or by transforming the in-phase and quadrature signals in the carrier phase synchronisation unit 27 itself.

Other applicable carrier phase synchronisation methods are described in "Digital Communications", John. G. Proakis, McGraw Hill International, pp. 193-199.

The synchronisation is then recovered by correlating the (phase-corrected) quadrature signal with the known synchronisation sequence $c_S(t)$, which will produce strong periodic peaks indicating the clock timing. The clock timing aligns the de-spreading sequence $c_D(t)$ in the restored data spreading signal $c_{DR}$. This restored data spreading signal $c_{DR}$ is multiplied with the in-phase signal in the spread spectrum demodulator 32, which recovers the original analogue signal. The output low pass filter 33 removes any residual high frequency effects due to non-perfect orthogonality of the spreading codes.

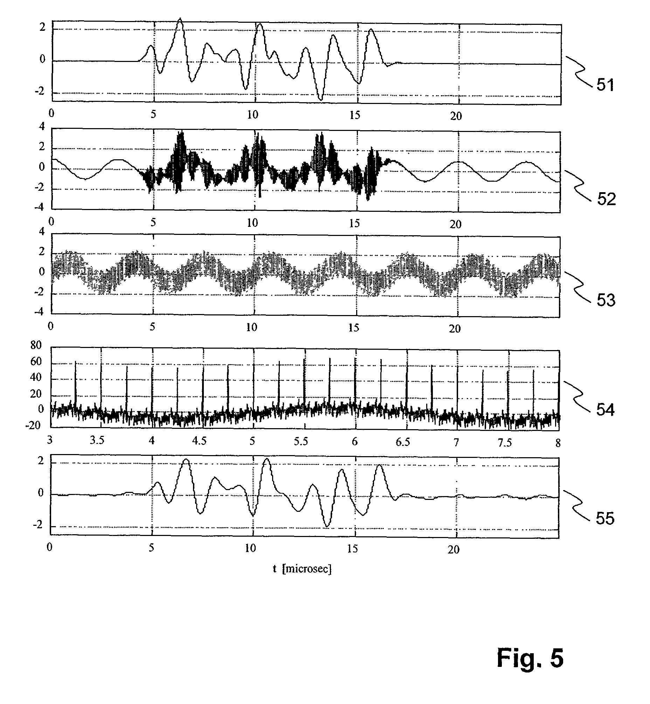

Figure 5 shows trajectories of signals over time t occuring in a system according to the second preferred variant of the invention: An analog input signal with trajectory 51 is limited to a bandwidth of 1 MHz. The sampling rate or rate of spreading chips is 252 MHz. The data spreading code $c_D(t)$ is a random but known ±1 chip sequence of arbitrary length. The synchronisation spreading code $c_S(t)$ is a periodic repetition of a random ±1 chip sequence of 63 chips, i.e. of 0.25 microseconds. The input signal is spread spectrum and carrier amplitude modulated according to the invention and transmitted over a channel. Channel distortion is modelled by a band-pass filter with a cut-off frequency of 1 MHz above and below the carrier frequency. A narrowband interference is modelled by adding a sine wave with a frequency equal to the carrier frequency plus 300 kHz to the carrier amplitude modulated signal $y_{RF}$. After carrier demodulation, trajectory 52 shows the restored modulated analog signal $a_{MR}$. The signal is seen to include an additional sinewave component which is due to the interference. Trajectory 53 shows the restored synchronisation spreading signal $c_{SR}$, also with an interference component. Trajectory 54 shows the correlation between the restored synchronisation spreading signal $c_{SR}$ and the synchronisation spreading code $c_S(t)$, with visible peaks corresponding to synchronisation pulses. Note that the time scale of trajectory 54 differs from the other trajectories. Trajectory 55 shows the restored analog signal.

A baseband transmission system according to the invention comprises a transmitter device for baseband transmission 11 and a receiver device for baseband reception 20 according to the first preferred variant of the invention. Such a system is suited for wire based systems such as copper wire or powerline carrier transmission systems. It provides the advantage that power spectral density of signals transmitted over the wire is limited, which may be required for electromagnetic compatibility (EMC) reasons.

A RF transmission system according to the invention comprises a transmitter device for RF transmission 11' and a receiver device for RF reception 20' according to the second preferred variant of the invention. Such a system is suited for wireless transmission.

A transmission system according to the invention has the advantage that it may be introduced transparently into an existing communication link with analog signals. No changes to the existing communication means are necessary, and no assumptions on the analog data to be transmitted are necessary. In particular, the analog signal may be zero or constant for a duration that is significantly longer than the duration $T_{REP}$ of a code. Furthermore, the transmission system according to the invention has a low delay, which is important for time critical applications, such as industrial automation. Such a system preferably transmits analog or line coded signals from wired fieldbusses, from sensors or actuators.

A transmission system transmitting analog data such as voice and music improves transmission fidelity. In all the exemplary embodiments described, multiple access of a common communication channel is enabled by having separate transmission systems use different synchronisation spreading $c_S(t)$ and data spreading $c_D(t)$ codes.

## List of designations

| 1 | input unit |
|---|---|
| 2 | clock |
| 3 | spread spectrum modulator |
| 4 | data spreading code generator |
| 5 | synchronisation spreading code generator |
| 6 | first carrier amplitude modulator |
| 7 | first transmitter carrier frequency generator |
| 8 | second transmitter carrier frequency generator |
| 9 | second carrier amplitude modulator |
| 10 | adder, summing means |
| 11 | transmitter device for baseband transmission |
| 11' | transmitter device for RF transmission |
| 20 | receiver device for baseband reception |
| 20' | receiver device for RF reception |
| 21 | first carrier frequency demodulator |
| 22 | first receiver carrier frequency generator |
| 23 | second receiver carrier frequency generator |
| 24 | second carrier frequency demodulator |

| | |
|---|---|
| 25 | first low pass filter |
| 26 | second low pass filter |
| 27 | carrier phase synchronisation unit |
| 28 | synchronisation correlation unit |
| 29 | data despreading code generator |
| 30 | synchronisation despreading code generator |
| 31 | subtracting unit |
| 32 | spread spectrum demodulator |
| 33 | output low pass filter |
| 34 | output unit |
| 51 | trajectory of analog input signal |
| 52 | trajectory of $a_{MR}$ with additional sinewave interference |
| 53 | trajectory of $c_{SR}$ with additional sinewave interference |
| 54 | trajectory of correlation between restored synchronisation spreading signal $c_{SR}$ and synchronisation spreading code $c_S(t)$ |
| 55 | trajectory of restored analog signal |
| $a_B$ | analog input signal |
| $a_M$ | modulated analog signal |
| $a_{MR}$ | restored modulated analog signal |
| $a_{RF}$ | carrier frequency modulated analog signal |
| $b$ | clock signal |
| $b_R$ | restored clock signal |
| $c_D$ | data spreading signal |
| $c_D(t)$ | data spreading code |
| $c_{DR}$ | restored data spreading signal |
| $c_{RF}$ | carrier frequency modulated clock signal |
| $c_S$ | synchronisation spreading signal |
| $c_S(t)$ | synchronisation spreading code |
| $c_{SR}$ | restored synchronisation spreading signal |
| $g$ | gain |
| $p$ | phase shift signal |
| $t$ | time axis |
| $y_{BB}$ | base band signal |
| $y_{RF}$ | carrier amplitude modulated signal |

**Claims**

1. A method for transmitting and restoring an analog input signal ($a_B$) by using direct spread spectrum modulation, **characterized in that** in a transmitter device (11,11'),

   a) a clock signal synchronises a data spreading signal ($c_D$) with a synchronisation spreading signal ($c_S$), each spreading signal ($c_D$, $c_S$) being formed by repeating a corresponding pseudorandom spreading code ($c_D(t)$, $c_S(t)$),
   b) the analog input signal ($a_B$) is modulated with the data spreading signal ($c_D$) to generate a modulated analog signal ($a_M$),
   c) a function of the modulated analog signal ($a_M$) and a function of the synchronisation spreading signal ($c_S$) are added to form a transmitted signal ($y_{RF}$, $y_{BB}$), and

   d) the transmitted signal ($y_{RF}$, $y_{BB}$) is transmitted

   and that in a receiver device (20,20')
   e) the transmitted signal is received as a received signal,
   f) a first function of the received signal is correlated with a pseudorandom synchronisation spreading code ($c_S(t)$), which correlation generates a restored clock signal ($b_R$),
   g) the restored clock signal ($b_R$) synchronises a generation of a restored data spreading signal ($c_{DR}$),
   h) a second function of the received signal is demodulated with the restored data spreading signal ($c_{DR}$), which generates a restored analog signal.

2. A method according to claim 1, **characterized in that**, in the transmitter device (11), the function of the modulated analog signal ($a_M$) is identical to the modulated analog signal ($a_M$) itself, and that the function of the synchronisation spreading signal ($c_S$) is identical to the synchronisation spreading signal ($c_S$) itself,

   and that, in the receiver device (20), the first and second function of the received signal are identical to the received signal ($y_{BB}$) itself.

3. A method according to claim 1, **characterized in that**, in the transmitter device (11), the function of the modulated analog signal ($a_M$) is identical to the modulated analog signal ($a_M$) itself, and that the function of the synchronisation spreading signal ($c_S$) is identical to the synchronisation spreading signal ($c_S$) itself,

   and that, in the receiver device (20), the first function of the received signal is identical to the received signal ($y_{BB}$) itself,
   that the restored clock signal ($b_R$) synchronises a generation of a restored synchronisation spreading signal ($c_{SR}$),
   and that the second function of the received signal is generated by subtracting the restored synchronisation spreading signal ($c_{SR}$) from the received signal ($y_{BB}$).

4. A method according to claim 1, **characterized in that**, in the transmitter device (11'), the function of the modulated analog signal ($a_M$) is obtained by modulating the modulated analog signal ($a_M$) by carrier amplitude modulation, that the function of the synchronisation spreading signal ($c_S$) is obtained by modulating the synchronisation spreading signal ($c_S$) by carrier amplitude modulation and that both carrier amplitude modulations are done with carrier signals that have the same frequency but a relative phase shift of 90°,

and that, in the receiver device (20'), each of the first and second function of the received signal is generated by demodulating the received signal ($y_{RF}$) with a carrier frequency signal, where the corresponding two carrier frequency signals have the same carrier frequency and a relative phase shift of 90°.

5. A method for transmitting an analog input signal ($a_B$) by using direct spread spectrum modulation, **characterized in that** in a transmitter device (11,11'),

   a) a clock signal synchronises a data spreading signal ($c_D$) with a synchronisation spreading signal ($c_S$), each spreading signal ($c_D$, $c_S$) being formed by repeating a corresponding pseudorandom spreading code ($c_D(t)$, $c_S(t)$),
   b) the analog input signal ($a_B$) is modulated with the data spreading signal ($c_D$) to generate a modulated analog signal ($a_M$),
   c) a function of the modulated analog signal ($a_M$) and a function of the synchronisation spreading signal ($c_S$) are added to form a transmitted signal ($y_{RF}$, $y_{BB}$), and
   d) the transmitted signal ($y_{RF}$, $y_{BB}$) is transmitted.

6. A method for restoring an analog signal that is modulated by direct spread spectrum modulation, and is transmitted as a transmitted signal, **characterized in that** in a receiver device (20,20'),

   e) the transmitted signal is received as a received signal,
   f) a first function of the received signal is correlated with a pseudorandom synchronisation spreading code ($c_S(t)$), which correlation generates a restored clock signal ($b_R$),
   g) the restored clock signal ($b_R$) synchronises a generation of a restored data spreading signal ($c_{DR}$),
   h) a second function of the received signal is demodulated with the restored data spreading signal ($c_{DR}$), which generates a restored analog signal.

7. A system for transmitting and restoring an analog input signal ($a_B$) by using direct spread spectrum modulation comprising a transmitter device (11,11') and a receiving device (20,20'), where the transmitter device (11,11') comprises a input unit (1) for providing the analog input signal ($a_B$) and a spread spectrum modulator (3) for modulating a signal with a data spreading signal ($c_D$) generated by a data spreading code generator (4), and where the receiving device (20,20') comprises means for receiving a received signal ($y_{RF}$, $y_{BB}$), a data despreading code generator (29) for generating a restored data spreading signal ($c_{DR}$), a spread spectrum demodulator (32) for demodulating a signal with the restored data spreading signal ($c_{DR}$) and a output unit (34) for an analog signal, **characterized in that**, in the transmitter device (11,11'),

   the spread spectrum modulator (3) is arranged to modulate the analog input signal ($a_B$) and to generate modulated analog signal ($a_M$), and **in that** the transmitter device (11,11') comprises a clock (2) for generating a clock signal and for synchronising code generation by the data spreading code generator (4) and a synchronisation spreading code generator (5) which generates a synchronisation spreading signal ($c_S$), a summing means (10) for adding a function of the modulated analog signal ($a_M$) to a function of the synchronisation spreading signal synchronisation spreading signal ($c_S$), generating a transmitted signal ($y_{RF}$, $y_{BB}$), and a transmitting means for transmitting the transmitted signal ($y_{RF}$, $y_{BB}$),

and **in that** the receiver device (20,20') comprises

   a synchronisation correlation unit (28) for correlating a first function of the received signal ($y_{RF}$, $y_{BB}$) with a pseudorandom synchronisation spreading code ($c_S(t)$) and generating a restored clock signal ($b_R$), a data despreading code generator (29) synchronised by said restored clock signal ($b_R$) and for generating a restored data spreading signal ($c_{DR}$), and a spread spectrum demodulator (32) for demodulating a second function of the received signal with the restored data spreading signal ($c_{DR}$) and for generating a restored analog signal.

8. A system according to claim 7, **characterized in that**, in the transmitter device (11), the summing means (10) is arranged to add the modulated analog signal ($a_M$) and the synchronisation spreading signal ($c_S$), generating a base band signal ($y_{BB}$) as the transmitted signal, and that, in the receiver device (20), the first and the second function of the received signal are the received signal ($y_{BB}$) itself.

9. A system according to claim 7, **characterized in that**, in the transmitter device (11),

   the summing means (10) is arranged to add the modulated analog signal ($a_M$) and the synchronisation spreading signal ($c_S$), generating a base band signal ($y_{BB}$) as the transmitted signal,

and **in that**, in the receiver device (20),

the synchronisation correlation unit (28) is arranged such that the first function of the received signal is the received signal itself, and **in that** the receiver device (20) comprises a synchronisation despreading code generator (30) synchronised by the restored clock signal ($b_R$), and a subtracing unit (31) for generating the second function of the received signal by subtracting the synchronisation spreading signal $c_S$ from the received signal ($y_{BB}$).

10. A system according to claim 7, **characterized in that** the transmitter device (11') comprises

a first carrier amplitude modulator (6) arranged to modulate the modulated analog signal ($a_M$) with a carrier frequency signal generated by a first transmitter carrier frequency generator (7), generating a carrier frequency modulated analog signal ($a_{RF}$), and a second carrier amplitude modulator (9) arranged to modulate the synchronisation spreading signal ($c_S$) with a carrier frequency signal generated by a second transmitter carrier frequency generator (8), generating a carrier frequency modulated clock signal carrier frequency modulated clock signal ($c_{RF}$), and where the two carrier frequency signals have the same frequency but a relative phase shift of 90°, and the adder (10) is arranged to add the the carrier frequency modulated analog signal ($a_{RF}$) and the carrier frequency modulated clock signal ($c_{RF}$), generating a carrier amplitude modulated signal ($y_{RF}$) as the transmitted signal,

and **in that** the receiver device (20') comprises

a first carrier frequency demodulator (21) and a second carrier frequency demodulator (24), each for demodulating the received signal with a carrier frequency signal, where the corresponding two carrier frequency signals have the same carrier frequency and a relative phase shift of 90°, and a carrier phase synchronisation unit for generating the first and second function of the received signal from the outputs of the first and second carrier frequency demodulator (21,24).

11. A transmitter device (11,11') with a direct spread spectrum modulation of an analog input signal ($a_B$), comprising a input unit (1) for providing the analog input signal ($a_B$) and a spread spectrum modulator (3) for modulating a signal with a data spreading signal ($c_D$) generated by a data spreading code generator (4), **characterized in that** the spread spectrum modulator (3) is arranged to modulate the analog input signal ($a_B$) and to generate modulated analog signal ($a_M$), and in that the transmitter device (11,11') comprises

a clock (2) for generating a clock signal and for synchronising code generation by the data spreading code generator (4) and a synchronisation spreading code generator (5) which generates a synchronisation spreading signal ($c_S$), a summing means (10) for adding a function of the modulated analog signal ($a_M$) to a function of the synchronisation spreading signal synchronisation spreading signal ($c_S$), generating a transmitted signal ($y_{RF}$, $Y_{BB}$), and a transmitting means for transmitting the transmitted signal ($y_{RF}$, $y_{BB}$).

12. A receiver device (20,20') with a direct spread spectrum demodulation resulting in an analog output signal, comprising means for receiving a received signal, a data despreading code generator (29) for generating a restored data spreading signal ($c_{DR}$), a spread spectrum demodulator (32) for demodulating a signal with the restored data spreading signal ($c_{DR}$) and a output unit (34) for an analog signal, **characterized in that** the receiver device (20,20') comprises

a synchronisation correlation unit (28) for correlating a first function of the received signal with a pseudorandom synchronisation spreading code ($c_S(t)$) and generating a restored clock signal ($b_R$), a data despreading code generator (29) synchronised by said restored clock signal ($b_R$) and for generating a restored data spreading signal ($c_{DR}$), and a spread spectrum demodulator (32) for demodulating a second function of the received signal with the restored data spreading signal ($c_{DR}$) and for generating a restored analog signal.

**Fig. 1**

**Fig. 2**

**Fig. 3**

**Fig. 4**

Fig. 5

European Patent
Office

**EUROPEAN SEARCH REPORT**

Application Number

EP 00 81 1017

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 2 276 794 A (ROKE MANOR RESEARCH) 5 October 1994 (1994-10-05) * the whole document * | 1-12 | H04B1/707 |
| A | EP 0 360 476 A (AMERICAN TELEPHONE & TELEGRAPH) 28 March 1990 (1990-03-28) * abstract * * column 1, line 10 - column 3, line 6 * * figure 3 * * claims 7-11 * | 1-12 | |

TECHNICAL FIELDS
SEARCHED      (Int.Cl.7)

H04B

The present search report has been drawn up for all claims

| Place of search | Date of completion of the search | Examiner |
|---|---|---|
| THE HAGUE | 9 April 2001 | Ó Donnabháin, E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 00 81 1017

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2001

| Patent document cited in search report | | Publication date | Patent family member(s) | | Publication date |
|---|---|---|---|---|---|
| GB 2276794 | A | 05-10-1994 | NONE | | |
| EP 0360476 | A | 28-03-1990 | US | 4912722 A | 27-03-1990 |
| | | | CA | 1306555 A | 18-08-1992 |
| | | | JP | 2116232 A | 27-04-1990 |

EPO FORM P0459

For more details about this annex : see Official Journal of the European Patent Office, No. 12/82